# EUROPEAN PATENT SPECIFICATION

(11) **EP 0 640 673 B1**
(45) Date of publication and mention of the grant of the patent: **08.12.1999**
(21) Application number: 94202324.3
(22) Date of filing: 16.08.1994
(51) Int. Cl.: C09J 7/02, C09J 7/04, D21H 27/20, D06N 7/00

(54) **Method for applying a wallpaper to a substrate, such as a wall or partition.**
Verfahren zum aufbringen einer Tapete auf ein Substrat, wie eine Wand oder Trennwand.
Procédé pour appliquer un papier-peint sur un substrat, tel que mur ou cloison.

(30) Priority: 17.08.1993 NL 9301425
(43) Date of publication of application: 01.03.1995
(73) Proprietor: Handelsonderneming "Rogeco", NL-3208 CE Spijkenisse (NL)
(72) Inventor: Buitink, Gerrit Jam, NL-3208 Spijkenisse (NL); Korpershoek, Roelof, NL-3204 TM Spijkenisse (NL)
(74) Representative: Smulders, Theodorus A.H.J., Ir.

(56) References cited:
- BE-A- 643 767
- GB-A- 1 241 177
- GB-A- 2 056 317

## Description

The invention relates to a method for applying a wallpaper to a substrate, such as a wall or partition, comprising the steps of
- applying a layer of an adhesive to a substrate
- applying a layer of a similar adhesive to a wallpaper and
- applying the wallpaper to the thus prepared substrate.

With the commonly used method of applying wallpaper to a substrate, usually a wall or partition, a considerable number of drawbacks are associated. Usually, the wallpaper is supplied in rolled-up strips having a length of ten meters and a width of approximately half a meter, and is unrolled shortly before applying it and provided, on the back side thereof, with a layer of glue on a water base. The wallpaper should be held at least at the ends thereof, as the strip tends to return into the rolled-up condition. The strip provided with a layer of glue is applied to a wall and pressed. Subsequently, a next strip is pasted on the wall, next to and against the previous strip. If this strip did not end up in the correct position, it can be pulled loose again carefully. However, due to the application of a glue on a water base, the wallpaper has become weak, as a result of which it tears easily.

When being applied, the wallpaper, having become weak, stretches slightly, while it shrinks again during drying. This causes slits between the adjoining strips of wallpaper. It is true that this can be prevented by pasting the edge of one strip of wallpaper slightly over the edge of the previous strip, but this is often undesired for aesthetic reasons, in particular if the wallpaper has a continuous pattern. Hence, such a type of wallpaper is usually manufactured from a thicker layer of paper, which stretches less easily.

When a wet, soft wallpaper, applied to a wall and provided with a relief impressed into the wallpaper (gauffrage), is pressed by means of a brush, the result is often that the relief is largely pressed flat and lost. To prevent this, such types of wallpaper have been manufactured from two (glue-)coated layers of paper (duplex paper).

Smearing a layer of glue over a recurling strip of wallpaper, holding the smeared strip of wallpaper and applying it to a wall is usually considered a "dirty" job.

Attempts have been made to facilitate wallpapering by marketing types of wallpaper provided, on the back sides thereof, with a dry layer of adhesive or glue. By passing the roll of wallpaper through a tray of water, the layer of glue was activated and after a specific swelling period the strip of wallpaper was ready for being applied. However, as this still concerns a wet method, the same drawbacks as those described hereinabove are inherent to it.

From GB-B-1,241,177 it is known to apply a wallpaper in a dry condition to a wall. In order to adhere to such wall the dry adhesive of the wallpaper has to be activated by the application of heat (above 79.4°C) and/or pressure (above 34.5 10³ Pa). In order to remove the wallpaper from the wall the adhesive has to be retackified by again the application of heat and/or pressure.

Even apart from the problem arising when the wallpaper is being applied to a wall, the removal thereof from a wall is even more problematic. The dried layer of glue should be loosened by means of a filling-knife, which usually causes damages to the wall. Usually, the wallpaper should first be brought into a wet condition by means of a steam apparatus.

The object of the invention is to provide a method for applying a wallpaper to a substrate wherein the above-mentioned drawbacks have been overcome.

To this end, the method according to the invention is characterized in that
- both adhesive layers consist of a non-sticky, cold adhesive glue, which in a dry condition is exclusively bondable to a similar type of adhesive,
- the wallpaper being provided with the adhesive in a preparatory process step, in which the adhesive is applied in a wet condition and subsequently dried,
- said wallpaper being applied to the substrate in a dry, non-moistened condition, with only a slight pressure.

The wallpaper is applied as a "dry" strip to a substrate which has been provided with a layer of adhesive that is dry as well.

As the wallpaper is applied in a dry condition, no stretching occurs in the strip of wallpaper, so that wallpaper with a continuous pattern can also be manufactured from thinner types of paper and applied in rapport. When this dry wallpaper with gauffrage is being applied, no deformation of the relief occurs and the wallpaper can be manufactured from thinner and hence cheaper types of paper. Consequently, the application of the wallpaper requires only a slight pressure.

The adhesive used has the favourable property of adhering exclusively to an identical or at least similar adhesive, allowing a wallpaper provided with such adhesive to be rolled up into a roll in a usual manner. The adhesive is applied in a wet condition to a substrate and is air-dried, which may or may not take place in a forced manner.

Further, the adhesive has as a property that it does not dry or harden, enabling the wallpaper provided with such adhesive to be pulled loose again from a wall in an easy manner, also after a long period of time.

The adhesive is known per se and is used in the packaging industry as cold-sealing coating.

Such type of adhesive is described in NL-A-6401218 and in BE-A-643,767, corresponding thereto.

It is observed that GB-A-2,056,317 discloses a method of applying for instance wallpaper to a substrate. The wallpaper is provided with a dry adhesive layer consisting of two layers. At least the outer layer of these two layers can be activated by moistening it with water. The wallpaper is applied in a wet condition to a substrate. Due to the composition of these adhesive layers, the wallpaper can be removed from the substrate again in a dry condition, in some cases without leaving behind any residues on the substrate.

## Claims

1. Method for applying a wallpaper to a substrate, such as a wall or partition, comprising the steps of
- applying a layer of an adhesive to a substrate
- applying a layer of a similar adhesive to a wallpaper and
- applying the wallpaper to the thus prepared substrate,
characterized in that
- both adhesive layers consist of a non-sticky, cold adhesive glue, which in a dry condition is exclusively bondable to a similar type of adhesive,
- the wallpaper being provided with the adhesive in a preparatory process step, in which the adhesive is applied in a wet condition and subsequently dried,
- said wallpaper being applied to the substrate in a dry, non-moistened condition, with only a slight pressure.

## Patentansprüche

1. Verfahren zum Aufbringen von Tapete auf ein Substrat, beispielsweise eine Wand oder eine Trennwand, mit den folgenden Schritten:
- Aufbringen einer Schicht Klebers auf ein Substrat,
- Aufbringen einer Schicht ähnlichen Klebers auf eine Tapete, und
- Aufbringen der Tapete auf das derart vorbereitete Substrat,
dadurch gekennzeichnet, daß
- beide Kleberschichten aus einem nicht-klebrigen, kalt haftenden Leim bestehen, der im trockenen Zustand ausschließlich mit einem ähnlichen Klebertyp verbindbar ist,
- die Tapete mit dem Kleber in einem vorbereitenden Verfahrensschritt versehen wird, in dem der Kleber im nassen Zustand aufgebracht und anschließend getrocknet wird,
- wobei die Tapete in trockenem unbefeuchteten Zustand unter lediglich geringem Druck auf das Substrat aufgebracht wird.

## Revendications

1. Procédé pour appliquer un papier peint à un substrat, tel que mur ou cloison, comprenant les étapes
- d'application d'une couche d'un adhésif à un substrat
- d'application d'une couche d'un adhésif semblable à un papier peint et
- d'application du papier peint au substrat ainsi préparé,
caractérisé en ce que
- les deux couches d'adhésif consistent en une colle adhésive à froid non collante qui, à l'état sec, peut être liée exclusivement à un type semblable d'adhésif,
- le papier peint étant muni de l'adhésif dans une étape de procédé préparatoire dans laquelle l'adhésif est appliqué dans un état humide puis séché,
- ledit papier peint étant appliqué au substrat dans un état sec non humidifié avec une légère pression seulement.
